# EUROPEAN PATENT APPLICATION

(11) **EP 4 668 589 A1**
(43) Date of publication of application: **24.12.2025**
(21) Application number: 25183845.4
(22) Date of filing: 18.06.2025
(51) Int. Cl.: H04B 1/707, H04J 13/00

(54) **CODE-DIVISION MULTIPLE-ACCESS (CDMA) BASED INTRA-AIRCRAFT WIRELESS SENSOR NETWORK (IAWSN)**

(30) Priority: 18.06.2024 IN 202411046815; 01.08.2024 US 202418792207
(71) Applicant: ARINC Incorporated, Annapolis, MD 21401 (US)
(72) Inventor: RAMAMURTHY, Prasanna, 560102 Bengaluru, KA (IN); SIVARAMASASTRY, Adishesha, 560061 Bangalore, KA (IN)
(74) Representative: Dehns

(57) **Abstract**

A code-division multiple-access (CDMA) based Intra-Aircraft Wireless Sensor Network (IAWSN) configured for structural health monitoring comprises a network of sensor nodes (142) configured as source nodes to transmit sensor data in accordance with a CDMA technique and a wireless data concentrator (WDC) (204) to receive the sensor data simultaneously from at least some of the sensor nodes. Each of the sensor nodes is assigned a synchronous CDMA code for spreading the sensor data and uniquely identifying transmissions from each sensor node. The WDC may use the synchronous CDMA codes to despread the simultaneously received sensor data and identify the particular sensor node from which the sensor data is received. The synchronous CDMA codes serve as a unique identifier of the sensor nodes, as well as provide for improved immunity from interference.

## Description

### TECHNICAL FIELD

The technical field relates to wireless communication technologies, specifically to the development and implementation of Code Division Multiple Access (CDMA) based wireless sensor networks for monitoring the health of aircraft systems. This includes enhancements in data transmission rates, network scalability, and interference management within intra-aircraft wireless sensor networks.

### BACKGROUND

Wireless sensor networks (WSNs) have become increasingly significant in the aviation industry, particularly for applications in aircraft health monitoring systems. These systems are crucial for ensuring the safety, efficiency, and maintenance of aircraft by continuously monitoring various parameters such as structural integrity, engine performance, and system functionalities. Historically, aircraft systems have relied heavily on wired sensors for monitoring critical parameters. However, the complexity and weight of wiring have prompted the shift towards wireless technologies, which offer easier installation and maintenance, reduced weight, and improved adaptability to new sensors and configurations.

Several patents and technologies that have laid the groundwork for current advancements. For instance, the patent titled "Architecture for Wireless Avionics Communication Networks" (US010666498B2) discusses an architecture that enhances the signal strength detection and data controller assignments for wireless nodes within aircraft. This system focuses on optimizing the network layout to improve the reliability and efficiency of data transmission among wireless sensors.

Another notable patent, "Performance Optimization for Avionic Wireless Sensor Networks" (US20180376367A1), introduces a system that includes a traffic characterization module and a rate estimator to manage data flow from sensors to consumers within an avionic network. This approach aims to maintain a target quality of service by regulating the data flow based on predicted service quality and required data rates.

Additionally, the patent "Deployment of a Wireless Aircraft Network" (US010827411B2) provides methods for selecting optimal channels and controllers for wireless sensor nodes based on scanned energy levels of available channels. This approach helps in reducing interference and enhancing the communication reliability of the wireless network.

Despite these advancements, existing technologies still face limitations, particularly in terms of data rate capabilities and interference management when multiple wireless technologies coexist, such as Bluetooth and Wi-Fi within the aircraft. These challenges are critical in environments where high data throughput and low latency are essential for real-time monitoring and decision-making.

### BRIEF DESCRIPTION OF THE DRAWINGS

FIG. 1 is a perspective view of an aircraft illustrating an Intra-Aircraft Wireless Sensor Network (IAWSN), in accordance with some embodiments.
FIG. 2 illustrates a representative architecture of IAWSN used for aircraft structural health monitoring (SHM), in accordance with some embodiments.
FIG. 3 illustrates a CDMA modulation schema, in accordance with some embodiments.
FIG. 4 illustrates co-channel interference in a network of IAWSN nodes, in accordance with some embodiments.
FIG. 5 illustrates a CDMA-based transceiver architecture for an IAWSN, in accordance with some embodiments.
FIG. 6 illustrates channel reallocation for an IAWSN, in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

The embodiments disclosed herein seek to address the limitations discussed above by introducing a CDMA-based physical layer for intra-aircraft wireless sensor networks, aiming to significantly enhance data transmission rates, reduce interference, and improve overall network scalability and reliability. This approach leverages the robustness of CDMA technology, well-proven in cellular networks, to meet the demanding requirements of modern aircraft health monitoring systems.

Some embodiments disclosed herein are directed to a code-division multiple-access (CDMA) based Intra-Aircraft Wireless Sensor Network (IAWSN) configured for structural health monitoring (SHM). In these embodiments, the IAWSN comprises a network of sensor nodes configured as source nodes to transmit sensor data in accordance with a CDMA technique and a wireless data concentrator (WDC) to receive the sensor data simultaneously from at least some of the sensor nodes. In these embodiments, each of the sensor nodes is assigned a synchronous CDMA code for spreading the sensor data and uniquely identifying transmissions from each sensor node. The WDC may be configured to use the synchronous CDMA codes to despread the simultaneously received sensor data and identify the particular sensor node from which the sensor data is received. In these embodiments, the synchronous CDMA codes serve as a unique identifier of the sensor nodes, as well as provide for improved immunity from interference. These embodiments as well as others are described in more detail below.

The aviation industry is continually evolving, with a strong focus on enhancing the safety, efficiency, and overall passenger experience of aircraft. One of the pivotal advancements in this domain is the development of wireless sensor networks (WSNs) within aircraft. These networks play a vital role in monitoring the health of the aircraft by collecting data from various sensors installed throughout the airplane. This data is crucial for assessing the structural integrity and functionality of different aircraft systems in real-time.

The described examples focus on a specific type of wireless sensor network that utilizes Code Division Multiple Access (CDMA) technology. This technology is adapted for use within the aircraft to improve the communication and data transmission capabilities of the wireless sensor networks. CDMA is a channel access method used by various radio communication technologies, and it has been effectively implemented in cellular networks to ensure reliable and interference-free communication.

The primary components of the described technology include wireless sensor nodes, wireless data concentrators, and a data acquisition and recording system. Wireless sensor nodes are small devices equipped with sensors and actuators that communicate wirelessly. They are responsible for capturing various types of data such as temperature, stress, and vibration from different parts of the aircraft. Wireless data concentrators act as controllers or routers that receive data from these sensor nodes. They play a crucial role in consolidating the data before it is sent to the data acquisition system. The data acquisition and recording system is the central unit that collects all the data from the concentrators. It processes and records this data, and it may also transmit it to ground systems for further analysis.

One of the primary challenges that this technology seeks to address is the interference and co-existence issues with other wireless devices and networks within the aircraft, such as Wi-Fi and Bluetooth. The shared use of the ISM frequency band (2.4 GHz) among these technologies can significantly impact the quality of service. This impact manifests in reduced data throughput, increased latency, and higher packet error rates, which are detrimental to the performance of the wireless sensor networks.

To tackle these challenges, the embodiments described herein disclose a re-design of the physical (PHY) layer of the 802.15.4 radio, which is commonly used in industrial and intra-aircraft wireless sensor networks. The proposed changes include restructuring the channel schema and replacing the existing baseband modulation technique with a synchronous CDMA implementation. This approach aims to increase the data rate of the radio to support a wider range of use cases and improve the network's ability to handle large-scale operations without compromising the quality of service.

The restructured channel schema involves reallocating the total bandwidth of 80 MHz to fewer, broader channels. Specifically, the embodiments disclosed herein may utilize two channels, each with 40 MHz bandwidth, which includes a main band and a guard band. This adjustment allows for a higher data rate, which is crucial for transmitting the large volumes of data generated by the sensors.

Furthermore, the synchronous CDMA implementation enhances the network's scalability and quality of service by using unique codes for each sensor node. These codes not only help in managing the data transmission more efficiently but also reduce the probability of interference between the nodes. This is particularly beneficial in environments where multiple nodes are operating in close proximity.

The described examples also highlight the use of a Software Defined Radio (SDR) integrated with an RF front end designed for 802.15.4 or 802.11 protocols. This integration allows for the implementation of the CDMA logic and the 40 MHz channel configuration as a software solution, which provides flexibility and ease of updates.

Overall, the described technology aims to significantly enhance the capability of intra-aircraft wireless sensor networks. By addressing the challenges of data rate limitations and interference, embodiments described herein may help ensure that the networks can reliably support the critical applications of aircraft health monitoring. This advancement not only contributes to the safety and operational efficiency of aircraft but also paves the way for more autonomous and intelligent aircraft systems in the future.

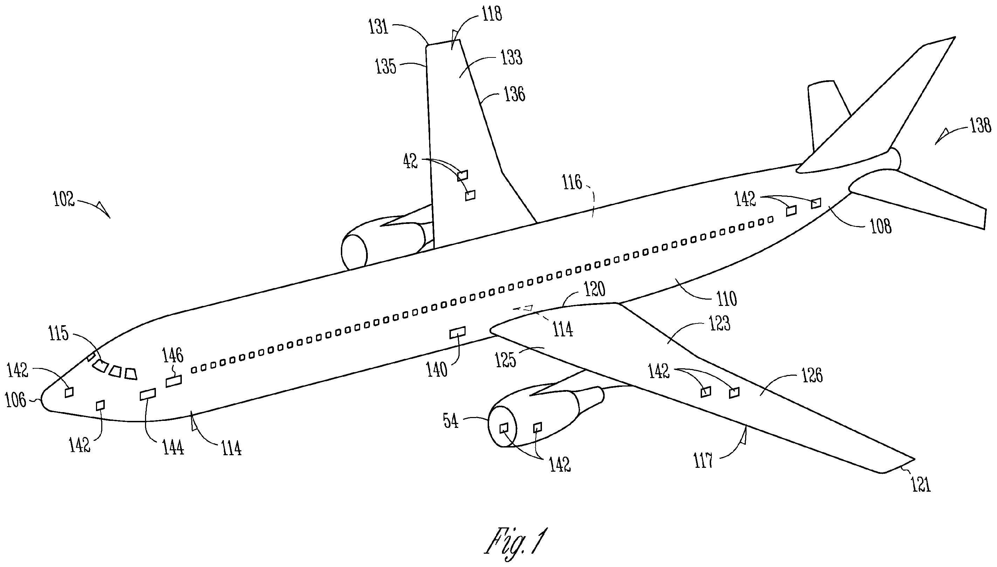

FIG. 1 is a perspective view of an aircraft illustrating an Intra-Aircraft Wireless Sensor Network (IAWSN), in accordance with some embodiments. This figure showcases the integration of various components and their functionalities within the IAWSN, tailored specifically for enhanced aircraft health monitoring. Aircraft 102 includes a fuselage 104 extending from a nose portion 106 to a tail portion 108 through a body portion 110. Body portion 110 houses an aircraft cabin 114 that includes a crew compartment 115 and a passenger compartment 116. Body portion 110 supports a first wing 117 and a second wing 118. First wing 117 extends from a first root portion 120 to a first tip portion 121 through a first airfoil portion 123. First airfoil portion 123 includes a leading edge 125 and a trailing edge 126. Second wing 118 extends from a second root portion (not shown) to a second tip portion 131 through a second airfoil portion 133. Second airfoil portion 133 includes a leading edge 135 and a trailing edge 136. Tail portion 8 includes a stabilizer 138. Aircraft 102 includes an engine 154 configured to provide propulsion to the aircraft 102.

In some embodiments, the aircraft 102 includes one or more wireless data concentrators 140 operable to establish wireless communication with a plurality of wireless sensor nodes 142 and one or more data consumers 144, 146. For example, data consumer 144 can be a controller, while data consumer 146 can be a data monitor. One or more of the wireless sensor nodes 142 communicate wirelessly with wireless data concentrator 140. The wireless sensor nodes 142 can have different characteristics in terms of data rates and priorities in the context of particular avionic applications. Some wireless sensor nodes 142 may only generate updated values several times per second, while other wireless sensor nodes 142 may generate hundreds or thousands of updated values per second. Wireless data concentrator 140 is a computational engine operable to control the dynamically varying load traffic in the IAWSN formed with respect to the wireless sensor nodes 142 and the data consumers 144, 146 which use sensor data in order to run control loops, log the data and monitor for some diagnostic or prognostic applications. For instance, some sensor data can be event driven and other sensor data is continuously generated at a known interval. Further, some sensor data is exclusively used for monitoring but not control operations, while other sensor data may be used for both monitoring and control operations or exclusively for control operations on the aircraft 102.

In accordance with embodiments, the IAWSN of aircraft 102 comprises a network of sensor nodes 142 configured as source nodes to transmit sensor data in accordance with a CDMA technique and the wireless data concentrator 140 to receive the sensor data simultaneously from at least some of the sensor nodes 142. In these embodiments, each of the sensor nodes 142 may be assigned a synchronous CDMA code for spreading the sensor data and uniquely identifying transmissions from each sensor node. The WDC 140 may be configured to use the synchronous CDMA codes to despread the simultaneously received sensor data and identify the particular sensor node from which the sensor data is received. In these embodiments, the synchronous CDMA codes serve as a unique identifier of the sensor nodes 142, as well as provide for improved immunity from interference. These embodiments as well as others are described in more detail below.

### Overview of Network Components and Configuration

At the core of the network, multiple wireless sensor nodes are deployed throughout the aircraft. These nodes are responsible for collecting critical data related to various aircraft parameters such as temperature, pressure, and structural integrity. Each sensor node is equipped with advanced sensing technology that allows for real-time data acquisition, crucial for maintaining the operational safety and efficiency of the aircraft.

### Data Aggregation and Transmission

The wireless sensor nodes transmit their collected data to a central unit known as the Data Aggregator. This component plays a pivotal role in the network by receiving data from all sensor nodes. The Data Aggregator is designed to handle high volumes of data inflow, which it aggregates and preprocesses before further analysis. This preprocessing might include data filtering and preliminary analysis to ensure that only relevant and accurate data is forwarded through the network, reducing the load and enhancing the efficiency of data transmission.

### Advanced Processing and Network Management

Following data aggregation, the processed information is transmitted to a higher-level system for detailed analysis and decision-making. This system could be an onboard processor or a ground-based server, depending on the configuration and specific requirements of the aircraft's monitoring system. The advanced processing unit applies sophisticated algorithms to analyze the data, identifying potential issues and anomalies that may indicate the need for maintenance or immediate intervention.

### Integration with CDMA Technology

The entire network utilizes CDMA technology to manage the data transmission process. This choice of technology is crucial for minimizing the interference among multiple signals transmitted simultaneously by various sensor nodes. CDMA allows each sensor node to transmit over the same frequency but uses unique spreading codes to differentiate between the signals. This method significantly enhances the network's ability to handle dense sensor environments typically found in aircraft systems.

### Quality of Service and Reliability

The network is engineered to ensure a high Quality of Service (QoS). It effectively manages the packet/bit error rates and latency, which are critical parameters in real-time monitoring systems. The robust design and implementation of CDMA technology also aid in mitigating potential issues related to co-channel and co-node interference, ensuring reliable and uninterrupted network performance.

The network sown in FIG. 1 may not only capable of providing comprehensive monitoring of aircraft health but also ensures the data integrity and reliability required for such critical applications. The integration of advanced sensor technology, efficient data handling, and CDMA-based transmission protocols makes this network an indispensable tool for modern aircraft operations, aiming to enhance safety, efficiency, and maintenance responsiveness.

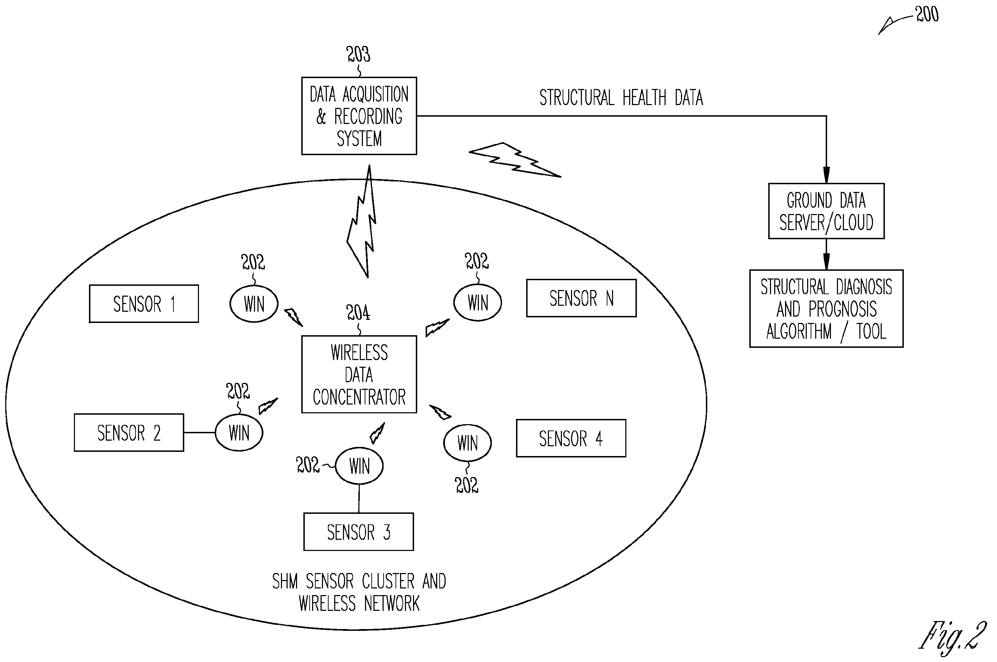

FIG. 2 illustrates a representative architecture of IAWSN used for aircraft structural health monitoring (SHM), in accordance with some embodiments. This figure illustrates the arrangement and interaction of various components within the network designed to enhance aircraft health monitoring capabilities. At the core of the network, the wireless sensor nodes 202 are distributed throughout the aircraft. These nodes are equipped with sensors and actuators that monitor various parameters such as temperature, stress, and vibration. Each Wireless Sensor Node 202 transmits data wirelessly, which allows for real-time monitoring of the aircraft's structural integrity and operational status.

The Wireless Data Concentrators 204 serve as intermediary devices that receive data from multiple Wireless Sensor Nodes 202. In some examples, these concentrators may aggregate the data, perform preliminary processing, and then transmit it to a central system. The concentrators are strategically placed to optimize the reception of signals from the sensor nodes, ensuring efficient data collection even from remote or shielded areas of the aircraft.

Data from the Wireless Data Concentrators 204 is then transmitted to the Data Acquisition and Recording System 203. This system acts as the central repository and processing unit for all sensor data collected throughout the aircraft. It may record the data for historical analysis and may also transmit relevant information to ground systems for further processing and decision-making support. The Data Acquisition and Recording System 203 is equipped with advanced processing capabilities to handle large volumes of data and support complex analytical algorithms.

The interconnections between these components are crucial for the seamless operation of the IAWSN. Wireless Sensor Nodes 202 communicate with Wireless Data Concentrators 204 using a wireless communication protocol that may be based on the IEEE 802.15.4 standard, as modified by the CDMA-based physical layer enhancements described in the document. This modification includes the use of synchronous CDMA technology, which improves data throughput and reduces interference from other wireless devices operating within the aircraft.

In some examples, the communication between Wireless Data Concentrators 204 and the Data Acquisition and Recording System 203 may also be wireless, utilizing the same enhanced IEEE 802.15.4 protocol, or it may be implemented using a wired connection depending on the specific requirements and configuration of the aircraft.

The described system may also include redundancy mechanisms, such as multiple Wireless Data Concentrators 204, to ensure reliability and continuous operation even in the event of a device failure. Additionally, the system may support dynamic reconfiguration, allowing it to adapt to changes in the sensor network or aircraft configuration without significant manual intervention.

Overall, FIG. 2 depicts a highly integrated and efficient wireless sensor network specifically tailored for intra-aircraft applications. The use of CDMA technology at the physical layer and the strategic placement of concentrators and data processing systems ensure that the network can handle the high demands of aircraft health monitoring applications. This setup not only enhances the safety and efficiency of aircraft operations but also supports the future development of more autonomous and intelligent aircraft systems.

As illustrated in FIG. 2, the flow of data from multiple sensors to a centralized recording system. Sensor 1 202, Sensor 2 202, Sensor 3 202, and Sensor 4 202 represent various sensor nodes deployed throughout the aircraft, each transmitting structural health data. These sensors connect wirelessly to a Wireless Data Concentrator 204, which aggregates and preprocesses the data. The processed data is then sent to a Ground Data Server or Cloud system where it undergoes further analysis by a Structural Diagnosis and Prognosis Algorithm/Tool. This tool generates health reports, maintenance recommendations, and design improvement recommendations based on the sensor data. The sensors are part of a larger SHM sensor cluster and wireless network, which is crucial for monitoring the structural health of the aircraft, particularly in measuring high-frequency vibration data which requires high data throughput.

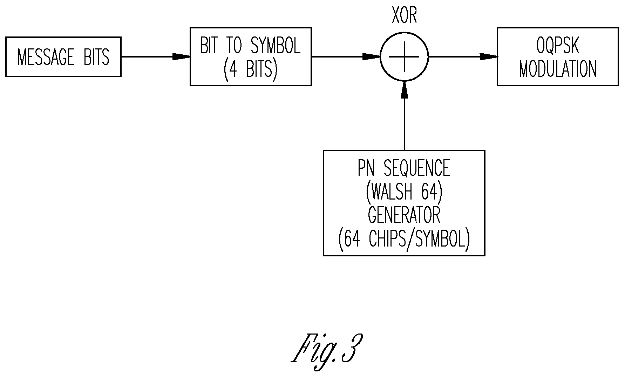

FIG. 3 illustrates a CDMA modulation schema, in accordance with some embodiments. As shown in FIG. 3, CDMA modulation circuitry may spread symbols using an assigned one of the synchronous CDMA codes, the Offset Quadrature Phase Shift Keying (OQPSK) modulation circuitry may modulate the spread symbols onto one or more carriers for transmission, and the symbol modulation circuitry may generate the symbols for the CDMA modulation from groups of information bits. In these embodiments, the CDMA modulation may utilize an exclusive OR (XOR) logical operation to spread each symbol with the assigned synchronous CDMA code. As shown in FIG. 3, the synchronous CDMA codes comprise a set of 64 Walsh codes. The set of 64 Walsh codes may be an orthogonal set of pseudorandom noise (PN) sequences. In these embodiments, 4-bits are encoded into a chip sequence of length 64 bits. These embodiments are discussed in more detail below.

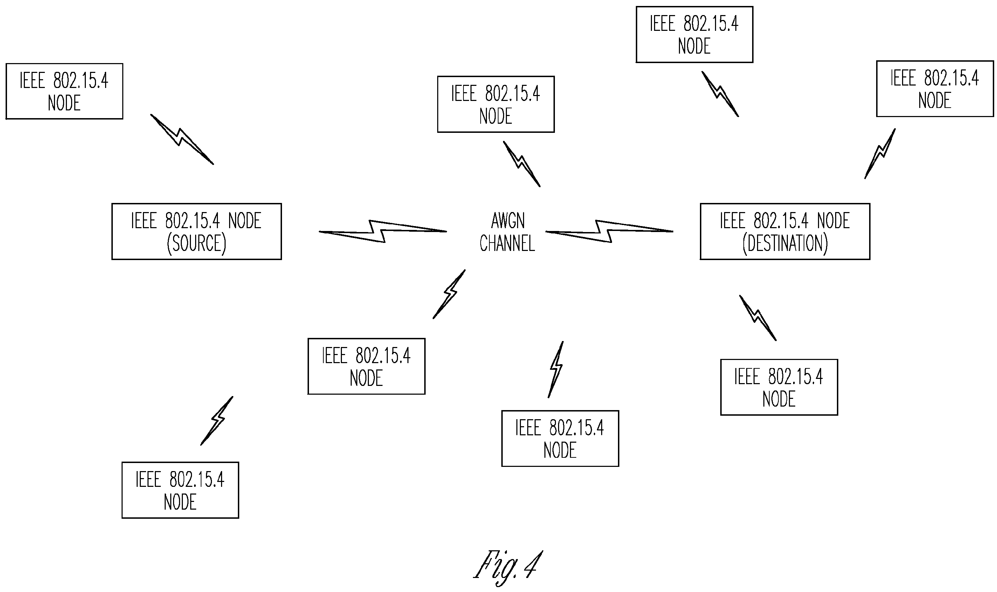

FIG. 4 illustrates co-channel interference in a network of IAWSN nodes, in accordance with some embodiments. This figure details the use of IEEE 802.15.4 Nodes in a network configuration where multiple nodes (labeled as IEEE 802.154 Node) are interconnected. Each node may act as a source or destination for data packets. The figure shows the data flow across an Additive White Gaussian Noise (AWGN) channel, highlighting the typical setup for transmitting data in environments with potential interference and noise. This setup is particularly relevant in the context of the described CDMA-based enhancements to the IEEE 802.15.4 standard, which aim to improve data throughput and reduce interference, thus enhancing the overall reliability and efficiency of the network.

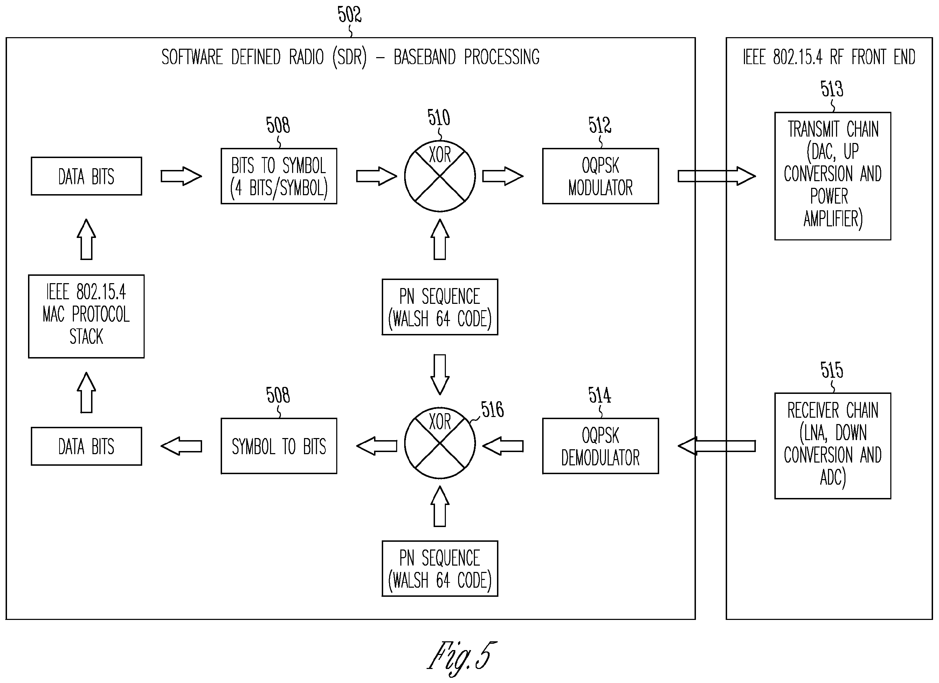

FIG. 5 illustrates a CDMA-based transceiver architecture for an IAWSN, in accordance with some embodiments. FIG. 5 shows the components of a Software Defined Radio (SDR) - Baseband processing setup for an IAWSN, according to some examples. The transmit chain (i.e., front-end transmitter circuitry 513) includes a Digital-to-Analog Converter (DAC), up-conversion, and Power Amplifier, which prepares and amplifies the signal for transmission. The receiver chain (front-end receiver circuitry 515) includes a Low Noise Amplifier (LNA), down-conversion, and Analog-to-Digital Converter (ADC), which processes incoming signals. The figure also illustrates the use of XOR operations and OQPSK Modulation in handling data bits and PN Sequence generation for transmission, ensuring data integrity and security across the wireless network. This setup is crucial for implementing the synchronous CDMA and O-QPSK modulation techniques described in the CDMA-based IAWSN, which are designed to handle higher data rates and improve the Quality of Service (QoS) by reducing bit error rates (BER) and packet error rates (PER).

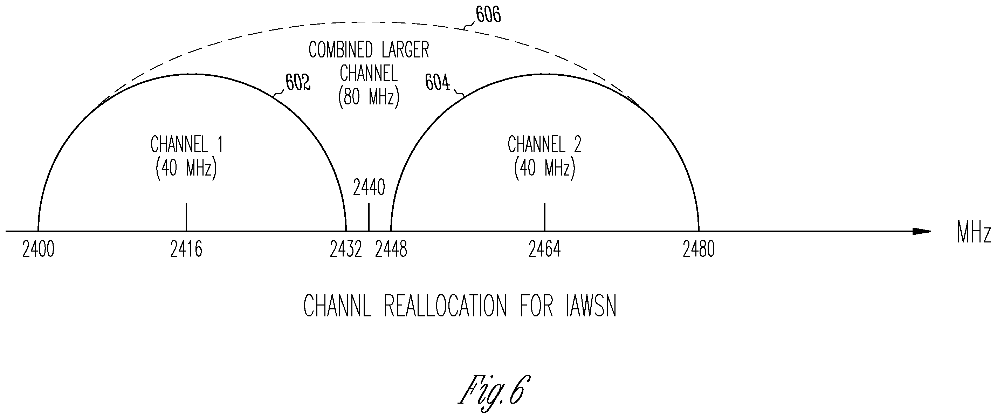

FIG. 6 illustrates channel reallocation for an IAWSN, in accordance with some embodiments. This figure details the channel reallocation for improved data transmission, where the total bandwidth is segmented into two larger channels (Channel 1 602 and Channel 2 602), each with 40 MHz. This setup allows for enhanced data throughput and reduced interference among the sensor nodes. The figure also specifies the frequency ranges for these channels, ensuring clarity in the allocation and usage of the spectrum. This channel restructuring is a key aspect of the proposed changes to the IEEE 802.15.4 PHY layer, aiming to support the high data rate requirements of advanced aircraft health monitoring applications.

As show in FIG. 4, multiple IEEE 802.15.4 Nodes are arranged in a network where each node may interfere with the others due to shared channel usage. The figure helps in understanding the impact of such configurations on data integrity and network performance, highlighting the need for effective interference management strategies in the design of IAWSNs. The use of CDMA with Walsh codes, as proposed, aims to mitigate these interference issues by providing each node with a unique spreading code, thus enhancing the network's capacity to handle simultaneous transmissions without significant loss of data integrity.

The proposed CDMA-based Intra Aircraft Wireless Sensor Network (IAWSN) is designed to handle various aircraft health monitoring use cases with enhanced data rates and improved Quality of Service (QoS). Some examples illustrating how the system would manage different scenarios are described below:

### 1. Structural Health Monitoring (SHM)

Use Case: Monitoring the integrity of the aircraft's structure, including stress and strain measurements from critical components.

Data Rate: SHM often requires high-frequency data collection, especially for parameters like vibration, which can have sampling rates up to 10 kHz. Given the precision required, data might need to be transmitted at rates of several Mbps.

Handling by Proposed System: The restructured PHY layer with CDMA technology allows for data rates of at least a couple of Mbps, as opposed to the traditional 802.15.4 standard which caps at 256 kbps. This ensures that high-frequency data can be transmitted in real-time without delays, crucial for timely detection of potential structural failures.

### 2. Engine Performance Monitoring

Use Case: Real-time monitoring of engine parameters such as temperature, pressure, and rotational speed to predict and prevent failures.

Data Rate: Engine sensors transmit substantial amounts of data due to the need to monitor several parameters simultaneously.

Handling by Proposed System: The proposed system's use of broader bandwidth channels (40 MHz per channel) significantly increases throughput. This capability allows the system to handle the dense data streams from engine sensors efficiently, ensuring that performance metrics are continually updated and analyzed.

### 3. Cabin Environmental Monitoring

Use Case: Ensuring optimal conditions within the aircraft cabin, including temperature, humidity, and air quality monitoring.

Data Rate: While individual data points might not require high throughput, the aggregate data from numerous sensors across the cabin can be substantial.

Handling by Proposed System: The CDMA implementation with unique codes for each sensor node reduces the risk of data collision and interference, even when numerous nodes transmit simultaneously. This setup maintains a stable and reliable network performance, ensuring continuous monitoring without data loss.

### 4. Emergency System Monitoring

Use Case: Critical monitoring of aircraft emergency systems such as electrical systems, hydraulic systems, and emergency exits.

Data Rate: Requires immediate transmission of data when parameters deviate from the norm, potentially involving bursts of high data rates during emergencies.

Handling by Proposed System: The synchronous CDMA code and the ability to operate over broader channels ensure that in emergencies, the transmission of high-priority signals is expedited without delay. The system's design to minimize latency and packet error rate is crucial in such high-stakes scenarios.

### 5. Co-existence with Other Wireless Systems

Use Case: Ensuring the IAWSN operates effectively in the presence of other wireless systems like Wi-Fi and Bluetooth, commonly used in aircraft.

Handling by Proposed System: The CDMA-based system is designed to minimize interference from other wireless devices operating in the same or overlapping frequency bands. The use of highly orthogonal Walsh codes in the CDMA implementation reduces the probability of interference, thus maintaining a high QoS even in environments crowded with multiple wireless signals.

These examples demonstrate the versatility and robustness of the proposed CDMA-based IAWSN in handling diverse and demanding use cases in aircraft health monitoring, ensuring both the safety and efficiency of air travel

Embodiments disclosed herein describe an IAWSN configured for SHM. This network includes a series of sensor nodes, each equipped to transmit sensor data using a CDMA technique. A wireless data concentrator (WDC) is employed to receive this data. Each sensor node is assigned a synchronous CDMA code that uniquely identifies its transmissions and aids in spreading the sensor data. The WDC uses these codes to despread the simultaneously received sensor data and accurately identify the source sensor node.

In some embodiments, both the sensor nodes and the WDC comprise a software-defined radio (SDR). The SDR is configured to implement functionalities such as CDMA modulation, Offset Quadrature Phase Shift Keying (OQPSK) modulation, and symbol modulation. This setup enhances the baseband processing capabilities of the network, facilitating robust and efficient data transmission.

In some embodiments, the sensor nodes and the WDC utilizing front-end transmitter circuitry configured for transmission of the modulated spread symbols in accordance with a low-power IEEE 802.15.4 technique. This configuration is particularly beneficial for extending battery life in battery-powered nodes and improving the network's immunity to interference without increasing transmit power.

Some embodiment extends the functionalities of the SDR to include wireless receiver capabilities. This includes OQPSK demodulation, CDMA demodulation, and symbol conversion to generate bits from despread symbols received from the CDMA demodulation. This comprehensive setup ensures that both transmission and reception processes are optimized for low-power operation and high data integrity.

In some embodiments, the synchronous CDMA codes used by the network comprise a set of 64 Walsh codes. These codes form an orthogonal set of pseudorandom noise sequences, which are particularly effective in encoding information into a chip sequence of length 64 bits, thereby enhancing the security and efficiency of data transmission.

In some embodiments, the sensor nodes are configured for transmission of the modulated spread symbols using up to two 40 MHz channels. This configuration allows for adjustable data rate operations, where a single 80 MHz channel can be used for higher data rate operations by combining the two 40 MHz channels, providing flexibility and scalability in network operations.

In some embodiments, the WDC is configured to signal the sensor nodes for either higher or lower data rate operations based on the flight phase of an aircraft. This dynamic data rate adjustment capability allows the network to optimize its performance and resource utilization according to the specific needs of each flight phase.

In some embodiments, the sensor nodes are configured in two or more groups to employ at least one of spectral diversity and spatial diversity. This setup allows for the use of the same set of synchronous CDMA codes across different groups by spatially separating them or operating them on different frequency channels, thus enhancing the network's scalability and performance.

In some embodiments, the processing circuitry of the WDC may be configured to determine the length of the synchronous CDMA code for use by the sensor nodes based on the required amount of spread to achieve the necessary isolation between the nodes. This feature allows for tailored network configurations that optimize performance based on specific operational requirements.

Each of these embodiments showcases a different aspect of the CDMA-based IAWSN, highlighting the system's versatility and advanced capabilities in enhancing aircraft health monitoring.

Embodiments are directed to a code-division multiple-access (CDMA) based Intra-Aircraft Wireless Sensor Network (IAWSN) 200 (see FIG. 2) configured for structural health monitoring (SHM). In these embodiments, the IAWSN comprises a network of wireless sensor nodes 202 configured as source nodes to transmit sensor data in accordance with a CDMA technique and a wireless data concentrator (WDC) 204 to receive the sensor data simultaneously from at least some of the sensor nodes. In these embodiments, each of the wireless sensor nodes 202 is assigned a synchronous CDMA code for spreading the sensor data and uniquely identifying transmissions from each sensor node. The WDC 204 may be configured to use the synchronous CDMA codes to despread the simultaneously received sensor data and identify the particular sensor node from which the sensor data is received. In these embodiments, the synchronous CDMA codes serve as a unique identifier of the sensor nodes, as well as provide for improved immunity from interference.

In some embodiments, each sensor node and the WDC comprises a software-defined radio (SDR) 502 (see FIG. 5) for baseband processing. In these embodiments, the SDR 502 may be configured by processing circuitry which may comprise one or more processors to implement wireless transmitter functionality comprising CDMA modulation 510 to spread symbols using an assigned one of the synchronous CDMA codes, Offset Quadrature Phase Shift Keying (OQPSK) modulation 512 to modulate the spread symbols onto one or more carriers for transmission, and symbol modulation 508 to generate the symbols for the CDMA modulation from groups of information bits. In these embodiments, each sensor node and the WDC may also comprise front-end transmitter circuitry 513 configured for transmission of the modulated spread symbols.

In these embodiments, the CDMA modulation may utilize an exclusive OR (XOR) logical operation to spread each symbol with the assigned synchronous CDMA code. An example of a CDMA modulation schema is illustrated in FIG. 3. An example of a CDMA-based transceiver architecture that includes an SDR for baseband processing is illustrated in FIG. 5. In some embodiments, the CDMA modulation 510, the OQPSK modulation 512 and the symbol modulation 508 may be implemented as, CDMA modulation circuitry, OQPSK modulation circuitry, and symbol modulation circuitry, respectfully (see FIG. 5).

In some embodiments, the front-end transmitter circuitry 513 may be configured for transmission of the modulated spread symbols in accordance with a low-power IEEE 802.15.4 technique. In these embodiments, the low-power operation of an IEEE 802.15.4 technique may be used since immunity to interference is increased through the use of CDMA without having to increase transmit power. Accordingly, battery life may be extended for battery powered nodes.

In some embodiments, the processing circuitry of the SDR is further configured to implement a wireless receiver comprising OQPSK demodulation 514 to retrieve the spread symbols from the one or more carriers for dispreading, CDMA demodulation 516 to despread the spread symbols using one of the synchronous CDMA codes, symbol conversion 518 to generate bits from despread symbols received from the CDMA demodulation. In these embodiments, each sensor node and the WDC further comprise front-end receiver circuitry 515 to receive the spread symbols. In these embodiments, the front-end receiver circuitry 515 may be configured to receive the spread symbols in accordance with a low-power IEEE 802.15.4 technique.

An example of a CDMA-based transceiver architecture that includes an SDR for baseband processing is illustrated in FIG. 5. In some embodiments, the OQPSK demodulation 514, the CDMA demodulation 516, and the symbol conversion 518 may comprise OQPSK demodulation circuitry, CDMA demodulation circuitry, and symbol conversion circuitry, respectfully. In some embodiments, each sensor node and the WDC may include memory to store the synchronous CDMA codes. The memory may store all of the assigned synchronous CDMA codes for both for the current sensor node or the WDC and other sensor nodes in the network.

In some embodiments, the synchronous CDMA codes comprise a set of 64 Walsh codes, the set of 64 Walsh codes being an orthogonal set of pseudorandom noise (PN) sequences. In these embodiments, 4-bits may be encoded into a chip sequence of length 64 bits.

In some embodiments, the sensor nodes may be configured for transmission of the modulated spread symbols using up to two 40 MHz channels 602 and 604 (see FIG. 6). In these embodiments, for lower-data rate operation, one of the 40 MHz channels may be used for transmission of the modulated spread symbols. In these embodiments, for higher-data rate operation, a single 80 MHz channel 606 (see FIG. 6) comprising the two 40 MHz channels may be used for transmission of the modulated spread symbols. An example of a channel allocation schema is illustrated in FIG. 6, which shows two channels of 40 MHz (32 MHz main band and 8 MHz guard band) each with the option to combine them into a single channel of 80 MHz (64 MHz main band and 16 MHz guard band) to provide increased data rate communication between the network elements.

In some embodiments, when one of the sensor nodes is configured for the higher data rate operation (i.e., a data rate of up to 4 Mbps), the OQPSK modulation may modulate the spread symbols with a larger 80 MHz bandwidth carrier obtained by combining the two 40 MHz channels into a single channel. In these embodiments, when one of the sensor nodes is configured for the lower data rate operation (i.e., a data rate of up to 2 Mbps), the OQPSK modulation may modulate the spread symbols on a single carrier for an 40 MHz bandwidth transmission comprising a single 40 MHz bandwidth channel. In these embodiments, the chip rate for CDMA modulation may be up to 64 chips per symbol. For the higher data rate operation, the OQPSK modulation may be configured to modulate the spread symbols at a symbol rate of at least 0.5 Msymbols per second to achieve a target data rate of 2 Mbps.

In some embodiments, for both the higher data rate operation and the lower data rate operation, the processing circuitry may perform symbol modulation to generate the symbols for the CDMA modulation at a rate of up to four bits per symbol. In these embodiments, for the higher data rate operation one larger logical channel is used for transmission of the sensor data, and for the lower data rate operation two smaller logical channels are used one at a time for transmission the sensor data.

In some embodiments, at least some of the sensor nodes may be configured for variable data-rate operation. In these embodiments, for the variable data-rate operation the sensor nodes are configured to encode and transmit the sensor data in accordance with a data rate signaled by the WDC. In these embodiments, the WDC may indicate to one or more of the sensor nodes which data rate to use which may include the sensor node using a 40 MHz channel or an 80 MHz channel. In some embodiments, the WDC may be configured to signal the sensor nodes for one of the higher data rate operation and the lower data rate operation based on a flight phase of an aircraft.

In some embodiments, each sensor node may further comprise a medium access control (MAC) layer protocol stack configured to generate a data frame from information bits. The data frame may be configured in accordance with a predetermined packet format. The predetermined packet format may comprise an IEEE 802.15.4 packet format. In these embodiments, a 16 bit short address field of the IEEE 802.15.4 packet format is either not used or encoded to include sensor data instead of a short address that identifies the sensor node.

In some embodiments, the sensor nodes are configured in two or more groups to employ at least one of spectral diversity and spatial diversity. In these embodiments, when spatial diversity is employed, a first group of sensor nodes configured to be spatially separated on the aircraft from a second group of sensor nodes to allow the first group and the second group to use of a same set of the synchronous CDMA codes. In these embodiments, when spectral diversity is employed, the first group of sensor nodes may operate on a different frequency channel from the second group of sensor nodes to allow the first group and the second group to use of a same set of the synchronous CDMA codes. In these embodiments, with the combination of spatial and spectral diversity, the scale of the network could be increased in multiples of the number of synchronous CDMA codes (i.e., multiples of 64 when a set of 64 Walsh codes is used).

In some embodiments, the processing circuitry of the WDC may determine (i.e., select) a length of the synchronous CDMA code for use by the sensor nodes based on an amount of spread required to achieve a needed amount of isolation between the nodes. In these embodiments, more isolation may be needed for certain types of data, may be needed in certain areas of the aircraft, or may be needed during different phases of flight.

In some embodiments, the IAWSN may also be configured for Integrated Vehicle Health Monitoring (IVHM). In some embodiments, the sensor data includes but is not limited to vibration data, pressure, temperature, velocity and torque. In these embodiments, the sensor nodes sample the sensor data at up to a maximum of 10 kHz sampling rate with double precision floating point (i.e., 32 bits).

In some embodiments, the processing circuitry of the SDR may further be configured to implement, instead of the CDMA modulation, a direct-sequence spread spectrum (DSSS) modulation technique for transmission in a set of 2 MHz bandwidth channels configured in accordance with IEEE 802.15.3.

Some embodiments are directed to a code-division multiple-access (CDMA) based Intra-Aircraft Wireless Sensor Network (IAWSN) comprising a network of wireless sensor nodes 202 configured as source nodes to transmit sensor data in accordance with a CDMA technique and a wireless data concentrator (WDC) 204 to receive the sensor data simultaneously from at least some of the sensor nodes. In these embodiments, each of the sensor nodes comprises a medium access control (MAC) layer and a physical layer (PHY), the PHY layer comprising a software-defined radio (SDR) 502 for baseband processing. In these embodiments, each of the wireless sensor nodes 202 is assigned a synchronous CDMA code for spreading the sensor data and uniquely identifying transmissions from each sensor node. The WDC 204 may use the synchronous CDMA codes to despread the simultaneously received sensor data and identify the particular sensor node from which the sensor data is received.

In these embodiments, the MAC layer may comprise a MAC protocol stack configured to generate a data frame from information bits, the data frame configured in accordance with a predetermined packet format, the predetermined packet format comprising an IEEE 802.15.4 packet format. In these embodiments, the PHY layer comprises a software-defined radio (SDR) 502 for baseband processing, the SDR 502 configured by processing circuitry to implement wireless transmitter functionality comprising CDMA modulation 510 to spread symbols using an assigned one of the synchronous CDMA codes, Offset Quadrature Phase Shift Keying (OQPSK) modulation 512 to modulate the spread symbols onto one or more carriers for transmission, and symbol modulation 508 to generate the symbols for the CDMA modulation from groups of information bits.

Some embodiments are directed to a method for structural health monitoring (SHM) performed by a code-division multiple-access (CDMA) based Intra-Aircraft Wireless Sensor Network (IAWSN) 200 (see FIG. 2). In these embodiments, the method may comprise transmitting sensor data in accordance with a CDMA technique by a network of wireless sensor nodes 202, and receiving the sensor data simultaneously from at least some of the sensor nodes at a wireless data concentrator (WDC) 204. In these embodiments, each of the wireless sensor nodes 202 is assigned a synchronous CDMA code for spreading the sensor data and uniquely identifying transmissions from each sensor node. The WDC 204 may use the synchronous CDMA codes to despread the simultaneously received sensor data and identify the particular sensor node from which the sensor data is received. In these embodiments, each sensor node and the WDC may comprise a software-defined radio (SDR) 502 for baseband processing. The SDR 502 may be configured by processing circuitry which may comprise one or more processors for spreading symbols using an assigned one of the synchronous CDMA codes and modulating the spread symbols in accordance with Offset Quadrature Phase Shift Keying (OQPSK) modulation onto one or more carriers for transmission.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

The scope of the invention is defined by the claims, with each dependent claim dependent alone on the independent claim or in combination with any other dependent claim.

## Claims

1. A code-division multiple-access, CDMA, based Intra-Aircraft Wireless Sensor Network, IAWSN, configured for structural health monitoring, SHM, the IAWSN comprising:
a network of sensor nodes (142) configured to transmit sensor data in accordance with a CDMA technique; and
a wireless data concentrator, WDC, (204) to receive the sensor data simultaneously from the sensor nodes,
wherein each of the sensor nodes is assigned a synchronous CDMA code for spreading the sensor data and identifying each sensor node, and
wherein the WDC is configured to use the synchronous CDMA codes to despread the received sensor data and identify the sensor node from which the sensor data is received.

2. The IAWSN of claim 1, wherein each sensor node and the WDC comprises a software-defined radio, SDR (502), the SDR configured by processing circuitry to implement:
CDMA modulation to spread symbols using an assigned one of the synchronous CDMA codes;
Offset Quadrature Phase Shift Keying, OQPSK, modulation to modulate the spread symbols onto one or more carriers for transmission; and
symbol modulation to generate the symbols for the CDMA modulation from groups of information bits, and
wherein each sensor node and the WDC further comprise front-end transmitter circuitry (513) configured for transmission of the modulated spread symbols.

3. The IAWSN of claim 2, wherein the front-end transmitter circuitry (513) is configured for transmission of the modulated spread symbols in accordance with a low-power IEEE 802.15.4 technique.

4. The IAWSN of claim 3, wherein the processing circuitry is further configured to implement:
OQPSK demodulation to retrieve the spread symbols from the one or more carriers for despreading;
CDMA demodulation (516) to despread the spread symbols using one of the synchronous CDMA codes; and
symbol conversion (518) to generate bits from despread symbols received from the CDMA demodulation,
wherein each sensor node and the WDC further comprise front-end receiver circuitry (515) to receive the spread symbols, and
wherein the front-end receiver circuitry (515) is configured to receive the spread symbols in accordance with a low-power IEEE 802.15.4 technique; and optionally
wherein the synchronous CDMA codes comprise a set of 64 Walsh codes, the set of 64 Walsh codes being an orthogonal set of pseudorandom noise, PN, sequences.

5. The IAWSN of claim 4, wherein the sensor nodes are configured for transmission of the modulated spread symbols using up to two 40 MHz channels,
wherein for lower data rate operation, one of the 40 MHz channels is used for transmission of the modulated spread symbols, and
wherein for higher data rate operation, a single 80 MHz channel comprising the two 40 MHz channels is used for transmission of the modulated spread symbols.

6. The IAWSN of claim 4, wherein when one of the sensor nodes is configured for a higher data rate operation, the OQPSK modulation is configured to modulate the spread symbols with a larger 80 MHz bandwidth carrier obtained by combining two 40 MHz channels into a single channel, and
wherein when one of the sensor nodes is configured for a lower data rate operation, the OQPSK modulation is configured to modulate the spread symbols on a single carrier for an 40 MHz bandwidth transmission comprising a single 40 MHz bandwidth channel; and optionally:
wherein for both the higher data rate operation and the lower data rate operation, the processing circuitry is configured to perform the symbol modulation to generate the symbols for the CDMA modulation at a rate of up to four bits per symbol.

7. The IAWSN of claim 6, wherein the sensor nodes are configured for variable data-rate operation,
wherein for the variable data-rate operation the sensor nodes are configured to encode and transmit the sensor data in accordance with a data rate signaled by the WDC; and optionally
wherein the WDC is configured to signal the sensor nodes for one of the higher data rate operation and the lower data rate operation based on a flight phase of an aircraft.

8. The IAWSN of claim 7, wherein each sensor node further comprises a medium access control, MAC, layer protocol stack configured to generate a data frame from information bits, the data frame configured in accordance with a predetermined packet format, the predetermined packet format comprising an IEEE 802.15.4 packet format, wherein a short address field of the IEEE 802.15.4 packet format is encoded to include sensor data.

9. The IAWSN of claim 4 or any claim dependent thereon, wherein the sensor nodes are configured in two or more groups to employ at least one of spectral diversity and spatial diversity,
wherein when spatial diversity is employed, a first group of sensor nodes configured to be spatially separated from a second group of sensor nodes to allow the first group and the second group to use of a same set of the synchronous CDMA codes, and
wherein when spectral diversity is employed, the first group of sensor nodes is configured to operation on a different frequency channel from the second group of sensor nodes to allow the first group and the second group to use of a same set of the synchronous CDMA codes.

10. The IAWSN of claim 4 or any claim dependent thereon, wherein the processing circuitry of the WDC is configured to determine a length of the synchronous CDMA code for use by the sensor nodes based on an amount of spread to achieve isolation between the nodes.

11. The IAWSN of claim 4 or any claim dependent thereon, wherein the IAWSN is further configured for Integrated Vehicle Health Monitoring, IVHM,
wherein the sensor data includes vibration data, pressure, temperature, velocity and torque and
wherein the sensor nodes sample the sensor data at up to a maximum of 10 kHz sampling rate with double precision floating point.

12. The IAWSN of claim 4 or any claim dependent thereon, wherein the processing circuitry of the SDR is further configured to implement a direct-sequence spread spectrum, DSSS, modulation technique for transmission in a set of 2 MHz bandwidth channels configured in accordance with IEEE 802.15.3.

13. A code-division multiple-access, CDMA, based Intra-Aircraft Wireless Sensor Network, IAWSN, comprising:
a network of sensor nodes configured to transmit sensor data in accordance with a CDMA technique; and
a wireless data concentrator, WDC, to receive the sensor data simultaneously from the sensor nodes,
wherein each of the sensor nodes comprises a medium access control, MAC, layer and a physical layer, PHY, the PHY layer comprising a software-defined radio, SDR, for baseband processing,
wherein each of the sensor nodes is assigned a synchronous CDMA code for spreading the sensor data by the PHY layer and identifying each sensor node, and
wherein the WDC is configured to use the synchronous CDMA codes to despread the received sensor data and identify the sensor node from which the sensor data is received.

14. A method for structural health monitoring, SHM, performed by a code-division multiple-access, CDMA, based Intra-Aircraft Wireless Sensor Network, IAWSN, the method comprising:
transmitting sensor data in accordance with a CDMA technique by a network of sensor nodes; and
receiving the sensor data simultaneously from the sensor nodes at a wireless data concentrator, WDC,
wherein each of the sensor nodes is assigned a synchronous CDMA code for spreading the sensor data and identifying each sensor node, and
wherein the WDC is configured to use the synchronous CDMA codes to despread the received sensor data and identify the sensor node from which the sensor data is received.

15. The method of claim 14, wherein each sensor node and the WDC comprises a software-defined radio, SDR, the SDR configured by processing circuitry for:
spreading symbols using an assigned one of the synchronous CDMA codes; and
modulating the spread symbols, in accordance with Offset Quadrature Phase Shift Keying, OQPSK, modulation, onto one or more carriers for transmission.
